# EUROPEAN PATENT APPLICATION

(11) **EP 1 990 729 A1**
(43) Date of publication of application: **12.11.2008**
(21) Application number: 06714758.7
(22) Date of filing: 27.02.2006
(51) Int. Cl.: G06F 12/08, G06F 13/16

(54) **PROCESSOR DEVICE AND INSTRUCTION PROCESSING METHOD**

(71) Applicant: Fujitsu Ltd., Kawasaki-shi, Kanagawa 211-8588 (JP)
(72) Inventor: UKAI, Masaki, Kawasaki-shi, Kanagawa 211-8588 (JP)
(74) Representative: Stebbing, Timothy Charles
(86) International application number: PCT/JP2006/303621
(87) International publication number: WO 2007/097029

(57) **Abstract**

A large number of requests can be stored irrespective of the buffer capacity of a response side, and the processing efficiency of a CPU core can be improved. A cache (102) receives a request from an instruction execution unit (101), searches for necessary data, outputs the data to the instruction execution unit (101) if there is a cache hit, and instructs a request storage unit (103) to request a move-in of the data if a cache miss occurs. The request storage unit (103) stores therein the request corresponding to the instruction of the cache (102) while the requested process is being executed. A REQID assignment unit (104) reads the request stored in the request storage unit (103), selects an unused REQID from a REQID table (105), and assigns the unused REQID to the read request. The REQID is an identification number of the request based on the number of requests set as the maximum number that can be received at a simultaneous time by a system controller (200) of the response side.

## Description

### TECHNICAL FIELD

The present invention relates to a processor device and an instruction processing method for issuing a request for a process to an external device, and more particularly relates to a processor device and an instruction processing method capable of storing a large number of requests irrespective of the buffer capacity of a response side and further improving the processing efficiency of a CPU core.

### BACKGROUND ART

Recently, mainstream information processing devices, such as computers, are configured to include a cache memory on a CPU (Central Processing Unit) to improve the processing speed of a CPU core by reducing the number of accesses to the CPU that generally has a low access speed. Although the cache memory can be accessed at highspeed, it has considerably smaller storage capacity than that of the main memory, so that data necessary for the CPU core may not sometimes be stored in the cache memory (cache miss). If such a situation occurs, the data stored in the main memory or in an upper level cache such as a secondary cache has to be moved in to the cache memory on the CPU.

More specifically, if a cache miss occurs in the cache memory, an address of cache-missed data and a move-in request to request a move-in of the data of the address are stored in a move-in buffer (MIB) of the CPU, and move-in requests are issued to the main memory or to the high-order cache in order from the one first stored in the MIB.

At this time, in the response side, such as the main memory or the high-order cache, that receives move-in requests, the move-in request is stored in the buffer used to receive requests from the CPU. In the response side, out-of-order control to randomly transfer the data to the CPU is performed to the move-in requests stored in the buffer around the same time. Therefore, it is necessary to make clear a correspondence relation between the move-in requests stored in the MIB and the move-in requests stored in the buffer of the response side. Because of this, the maximum number of physical queues corresponding to the maximum number of entries in the MIB is caused to coincide with the maximum number of entries that can be received by the buffer of the response side, and a physical queue number with which each move-in request is stored is added to each move-in request in the MIB and issued. Because the number of entries in the MIB and the number of entries in the response side coincide with each other, a correspondence between the move-in request in the MIB and the move-in request in the response side can be uniquely decided by the physical queue number, which makes the out-of-order control possible.

As explained above, there is an upper limit to the number of entries in the MIB, the upper limit being the number of entries that can be simultaneously received by the request receiving side. With regard to such a limitation, for example, Patent document 1 describes a technology in which the MIB having the limited number of entries is effectively used to efficiently control the reference to data in a memory.

Patent document 1: Japanese Patent Application Laid-open No. 2006-48181

### DISCLOSURE OF INVENTION

### PROBLEM TO BE SOLVED BY THE INVENTION

However, because the number of entries in the MIB is limited by the buffer capacity of the response side, if the entries in the MIB have reached their maximum number, a CPU core stops a subsequent memory operation such as an access to the cache memory, and this poses a limitation on the improvement of the processing efficiency of the CPU core. More specifically, when all the usable physical queues in the MIB are exhausted, a move-in request cannot be stored in the MIB even if the CPU core accesses the cache memory so that a cache miss occurs. Consequently, if the MIB is full, all the memory operations are stopped so as not to cause a new request to be stored in the MIB. This greatly interferes with efficient processing performed by the CPU core.

It may happen that the MIB is full, no cache miss occurs upon subsequent accesses to the cache memory, and the process is completed between the CPU core and the cache memory. In this case, a shortage of only one entry in the MIB causes a great loss of the processing efficiency. Therefore, it is desirable to increase the number of entries in the MIB and further improve the processing efficiency of the CPU core.

The present invention has been made to solve the conventional problem, and it is an object of the present invention to provide a processor device and a instruction processing method capable of storing a large number of requests irrespective of the buffer capacity of a response side and further improving the processing efficiency of the CPU core.

### MEANS FOR SOLVING PROBLEM

To solve the problem, the present invention provides a processor device that issues a request for a process to an external device. The processor device includes an execution unit that executes a predetermined instruction, a storage unit that stores therein requests for processes sequentially generated by execution of instructions by the execution unit, and a transmission unit that assigns pieces of identification information, corresponding to the number of requests that can be simultaneously received by the external device, to the respective requests stored by the storage unit, and transmits the request with the identification information to the external device.

In the present invention based on the above invention, the storage unit stores therein requests equal to or more than the number of requests that can be simultaneously received by the external device.

The present invention based on the above invention further includes a cache memory that stores therein data to be used when the execution unit executes an instruction, and when data necessary for the execution of the instruction by the execution unit is not stored in the cache memory, the storage unit stores therein a move-in request to request transfer of the data to the cache memory.

In the present invention based on the above invention, the transmission unit includes a table that stores a correspondence relation between the request and the identification information, and an assignment unit that refers to the table and assigns unused identification information, which is not associated with any request, to a new request.

In the present invention based on the above invention, the table stores the number of pieces of identification information coinciding with the number of requests that can be simultaneously received by the external device, each being associated with specific information for a corresponding request or with information indicating unused one.

The present invention based on the above invention further includes a cache memory that stores therein data to be used when the execution unit executes an instruction, and the storage unit stores therein a block write request to write the data stored in the cache memory to a predetermined address in an external memory other than the cache memory.

In the present invention based on the above invention, the transmission unit separately transmits a request and data to be written, the request containing information for an address to which the data is written.

In the present invention based on the above invention, the transmission unit transmits the request containing address information by assigning identification information thereto.

In the present invention based on the above invention, when a response, to the request, indicating that data can be received is obtained from the external device, the transmission unit transmits the data.

The present invention based on the above invention further includes a deassignment unit that deassigns, when a request is executed by the external device, the identification information in association with the already executed request as unused one.

In the present invention based on the above invention, the deassignment unit causes the storage unit to delete the already executed request therefrom.

The present invention provides an instruction processing method of issuing a request for a process to an external device. The method includes a step of executing a predetermined instruction, a step of storing therein requests for processes sequentially generated by execution of instructions at the step of executing, a step of assigning pieces of identification information corresponding to the number of requests that can be simultaneously received by the external device, to the respective requests stored at the step of storing, and a step of transmitting the request with the identification information assigned thereto at the step of assigning, to the external device.

### EFFECT OF THE INVENTION

According to the present invention, a predetermined instruction is executed, requests for processes sequentially generated by execution of instructions are stored, and pieces of identification information corresponding to the number of requests that can be simultaneously received by the external device are assigned to the stored respective requests, and the request with the identification information is transmitted. Therefore, the external device as the response side of the request identifies the request due to the identification information used in apparently the same case as the case where the number of requests stored in the request side coincides with the number of requests stored in the response side. Thus, the request side can store many requests regardless of the buffer capacity of the response side. Consequently, there is no need to stop execution of subsequent instructions caused by the limitation of the storage capacity of the requests, and this allows further improvement of the processing efficiency of the CPU core.

According to the present invention, requests equal to or more than the number of requests that can be simultaneously received by the external device are stored. Therefore, the request side can simultaneously perform more processes irrespective of the response process performed by the external device that is the response side of the request. Thus, it is possible to further improve the processing efficiency of the CPU core on the request side.

According to the present invention, when the data necessary for the execution of the instruction is not stored in the cache memory, the move-in request to request transfer of the data to the cache memory is stored. Therefore, the number of move-in requests, due to cache miss, equal to or more than the number that can be received by the response side are stored, and thus, even if many instructions related to the cache memory are executed, there is no need to stop execution of the instructions regardless of large or small buffer capacity of the response side.

According to the present invention, the table that stores the correspondence relation between the requests and the identification information is referred to, and unused identification information, which is not associated with any request, is assigned to a new request.

According to the present invention, pieces of the identification information coinciding with the number of requests that can be simultaneously received by the external device are stored, each being associated with either specific information for a corresponding request or with information indicating unused one.

Because of these, the identification information can be efficiently assigned to the request, the correspondence relation between the request and the identification information can be reliably made clear, and thus it is possible to accurately determine how each request is issued to the external device even if requests equal to or more than the number that can be received by the response side are stored.

According to the present invention, the block write request to write the data stored in the cache memory to a predetermined address in an external memory other than the cache memory is stored. Therefore, the block write requests, caused by copying of the memory, equal to or more than the number that can be received by the response side are stored, and thus, even if the copying of the memory is executed, there is no need to stop execution of the instructions regardless of large or small buffer capacity of the response side.

According to the present invention, the request containing information for an address to which the data is written and the data to be written are separately transmitted. Therefore, the data is transmitted only when the data is required and can be received, and this allows reduction in the time during which the buffer of the response side is occupied by the data, and also allows improvement of the throughput of the response side.

According to the present invention, the identification information is assigned to the request containing the address information and is transmitted. Therefore, a large number of block write requests related to a block store process can be stored regardless of the buffer capacity of the response side.

According to the present invention, when the response, to the request, indicating that data can be received is obtained from the external device, then the data is transmitted. Therefore, the data is reliably stored in the buffer of the response side, and the buffer is not occupied by the data more than necessary.

According to the present invention, when the request is executed by the external device, the identification information in association with the already executed request is deassigned as unused one. Therefore, it is possible to effectively use limited pieces of identification information corresponding to the number of requests that can be simultaneously received by the response side.

According to the present invention, the already executed request is deleted. Therefore, the storage area for the requests is always maximized, and thus execution of subsequent instructions can be more speedily continued.

### BRIEF DESCRIPTION OF DRAWINGS

[Fig. 1] Fig. 1 is a block diagram of a schematic configuration of an information processing device according to a first embodiment of the present invention.
[Fig. 2] Fig. 2 is a block diagram of the main configuration of a CPU according to the first embodiment.
[Fig. 3] Fig. 3 is a diagram of an example of contents of a REQID table according to the first embodiment.
[Fig. 4] Fig. 4 is a block diagram of the main configuration of a system controller according to the first embodiment.
[Fig. 5] Fig. 5 is a schematic diagram of a process in the CPU according to the first embodiment.
[Fig. 6] Fig. 6 is a block diagram of the main configuration of a CPU according to a second embodiment of the present invention.
[Fig. 7] Fig. 7 is a block diagram of the main configuration of a system controller according to the second embodiment.
[Fig. 8] Fig. 8 is a sequence diagram of operations upon block store process according to the second embodiment.

### EXPLANATIONS OF LETTERS OR NUMERALS

- 101: Instruction execution unit
- 102: Cache
- 103,: 151 Request storage unit
- 103a: MIB
- 103b: MIQ
- 151a: BWQ
- 104,: 152 REQID assignment unit
- 105: REQID table
- 106,: 153 REQID deassignment unit
- 201: Request receiving unit
- 202: ORDID assignment unit
- 203: I/O device search unit
- 204: Tag-information control unit
- 205: Tag information copy
- 206: Request transmission unit
- 207: Data receiving unit
- 208: ID conversion unit
- 209: Data transmission unit
- 251: Invalidation processor
- 252: Data-queue checking unit
- 253: Response transmission unit
- 254: Storing processor
- 255: Completion-report transmission unit

### BEST MODE(S) FOR CARRYING OUT THE INVENTION

Exemplary embodiments of the present invention are explained in detail below with reference to the accompanying drawings. In the following description, CPUs and a system controller in an SMP (Symmetric Multi Processor) configuration are explained as an example; however, the present invention is also applicable to a case where CPUs and a secondary cache are connected to each other or to a case where CPUs and a main memory are connected to each other. The present invention is also applicable to a case where a CPU and a CPU are connected to each other in ccNUMA (Cache Coherent Non-Uniform Memory Access) or the like. In short, the present invention is applicable to any case where a request is issued from the CPU to an external device and the external device responds to the request.

### (First Embodiment)

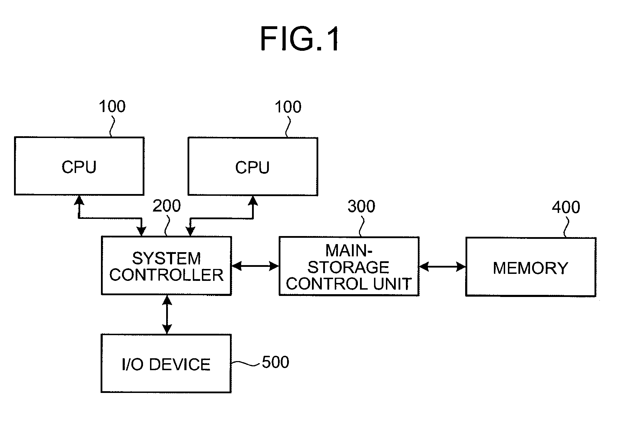

Fig. 1 is a block diagram of a schematic configuration of an information processing device according to a first embodiment of the present invention. The information processing device shown in Fig. 1 includes a plurality of CPUs 100, a system controller 200, a main-storage control unit 300, a memory 400, and an I/O (Input/Output) device 500.

Each of the CPUs 100 has a CPU core and a cache, and executes various computations and processes according to instructions in a computer program. The present embodiment is configured with an SMP, and thus each CPU 100 independently executes the processes. More specifically, for example, if a cache miss occurs for one of the CPUs 100, that CPU 100 issues a move-in request to the system controller 200 to fetch cache-missed data from the other CPU 100 or from the memory 400. At this time, in the present embodiment, the CPU 100 issues the move-in request by assigning thereto a request ID (hereinafter, "REQID") based on the number of requests set as the maximum number that can be received at a given time by the system controller 200. The more specific process performed by the CPU 100 is explained in detail later.

The system controller 200 controls accesses to the other CPU 100, the memory 400, or the I/O device 500 or the like which are required as a result of the process by each CPU 100. More specifically, for example, if a move-in request is issued from one of the CPUs 100, the system controller 200 causes the other CPU 100 or the memory 400 to transfer the move-in requested data to that CPU 100, and transmits the data to that CPU 100 as a move-in request issuing source.

The main-storage control unit 300 controls data input/output to/from the memory 400 as the main storage of the information processing device. An access speed of the memory 400 is lower than that of the cache in the CPU 100; however, it includes a RAM (Random Access Memory) with a large capacity and stores therein data and computer programs necessary for processing and computations in the CPU 100.

The I/O device 500 inputs and outputs data according to the control by the system controller 200. More specifically, the I/O device 500 includes a keyboard, a monitor, and a printer, and performs data input/output in various forms.

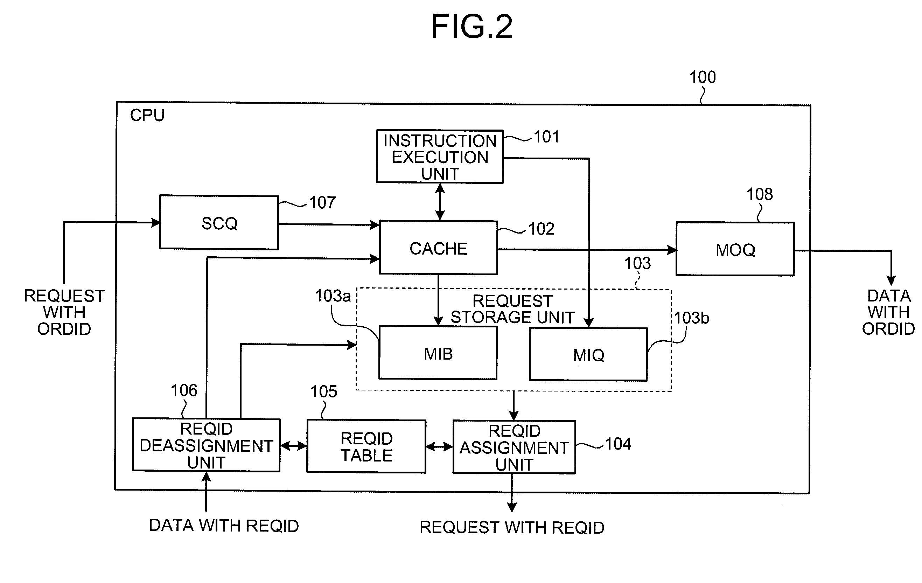

Fig. 2 is a block diagram of the main configuration of the CPU 100 according to the present embodiment. The CPU 100 shown in Fig. 2 includes an instruction execution unit 101, a cache 102, a request storage unit 103, a REQID assignment unit 104, a REQID table 105, a REQID deassignment unit 106, a system-controller queue (SCQ) 107, and a move-out queue (MOQ) 108.

The instruction execution unit 101 forms the CPU core, and reads data from the cache 102 and executes an instruction of the computer program or instructs the request storage unit 103 to read/write data from/to the I/O device 500.

The cache 102 receives the request from the instruction execution unit 101 and searches for necessary data. If the necessary data is stored therein (cache hit), the cache 102 outputs the data to the instruction execution unit 101. On the other hand, if the necessary data is not stored therein (cache miss), then the cache 102 instructs the request storage unit 103 to request a move-in of the data. The cache 102 also stores therein data output from the REQID deassignment unit 106. Furthermore, the cache 102 outputs the stored data to the MOQ 108 according to the request from the SCQ 107.

The request storage unit 103 stores therein requests corresponding to the instructions from the cache 102 and from the instruction execution unit 101 during execution of the requested processes. More specifically, the request storage unit 103 includes a move-in buffer (MIB) 103a and a move-in queue (MIQ) 103b.

If the cache miss occurs in the cache 102, the MIB 103a stores therein the move-in request to request the move-in of the cache missed data. The MIB 103a according to the present embodiment is configured to have an arbitrary number of physical queues irrespective of the number of entries that can be received by the system controller 200 as the response side.

The MIQ 103b stores therein requests for read/write of data irrelevant to the cache 102, as a result of the process performed by the instruction execution unit 101. More specifically, the MIQ 103b stores therein, for example, a request indicating that data is to be obtained from the I/O device 500. In the present embodiment, similarly to the MIB 103a, the MIQ 103b is also configured to have an arbitrary number of physical queues.

The REQID assignment unit 104 reads requests stored in the MIB 103a and the MIQ 103b while preferentially controlling either one of the requests, selects unused REQIDs from the REQID table 105, and assigns the selected REQIDs to the respective read requests. The REQID assignment unit 104 outputs the request with the REQID to the system controller 200, associates a physical queue number of the request with the REQID in the MIB 103a or the MIQ 103b with the REQID, and registers the physical queue number in the REQID table 105.

The REQID is an identification number of a request based on the number of requests set as the maximum number that can be received at a given time by the system controller 200, and the identification number is assigned to the move-in request stored in the MIB 103a and to the request stored in the MIQ 103b without being distinguished. In the present embodiment, the maximum number of the REQIDs is decided according to the buffer capacity of the system controller 200. Thus, even if the physical queue numbers in the MIB 103a and the MIQ 103b are set as arbitrary ones, a correspondence relation between the request in the CPU 100 and the request in the system controller 200 as the response side is made clear by the REQID.

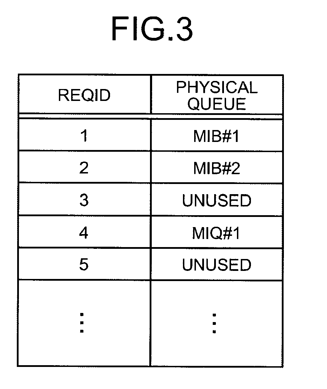

The REQID table 105 stores therein the REQID in association with the physical queue number of the request with the REQID. More specifically, for example, as shown in Fig. 3, the REQID table 105 associates each physical queue number in the MIB 103a or the MIQ 103b (e.g., "MIB #1" in Fig. 3) with each assigned REQID, and stores therein unused REQIDs (REQID indicated by "Unused" in Fig. 3). The REQID table 105 is updated when the REQID assignment unit 104 assigns the REQID to the request or when the REQID deassignment unit 106 deassigns the REQID from the request so that it is returned to the unused status.

When obtaining the data with the REQID from the system controller 200, the REQID deassignment unit 106 reads the physical queue number in the MIB 103a or the MIQ 103b corresponding to the REQID from the REQID table 105, deassigns the physical queue of the read number, and the REQID table 105 is thereby updated so that the REQID corresponding to the read physical queue number is returned to be unused status. The REQID deassignment unit 106 stores the obtained data in the cache 102 and completes the data move-in according to the move-in request stored in the MIB 103a or the MIQ 103b.

The SCQ 107 temporarily stores therein requests with order IDs (ORDIDs) issued from the system controller 200, executes the requests in the order of being stored, and transfers the data from the cache 102 to the MOQ 108.

The ORDID indicates an identification number such that an ID to identify the CPU issuing the request is assigned to the REQID of the request with the REQID issued from the CPU 100. In the present embodiment, the information processing device employs the SMP configuration, and thus, specific ID is assigned to each of the CPUs 100, and in the system controller 200, the request sent from each CPU 100 is identified by the ORDID obtained by assigning an ID of the CPU to the REQID. If the SMP configuration is not employed but one CPU 100 corresponds to one system controller 200 or if the request from the system controller 200 is always controlled in an in-order manner, the ORDID is not needed naturally.

The MOQ 108 temporarily stores therein data received from the cache 102 according to the request from the system controller 200, assigns ORDIDs to the data in the order of being stored, and moves out the data to the system controller 200. The request storage unit 103, the REQID assignment unit 104, the REQID table 105, and the REQID deassignment unit 106 mainly function in the CPU 100 that issues move-in requests, while the SCQ 107 and the MOQ 108 mainly function in the CPU 100 in which move-in data is stored in the cache 102 thereof.

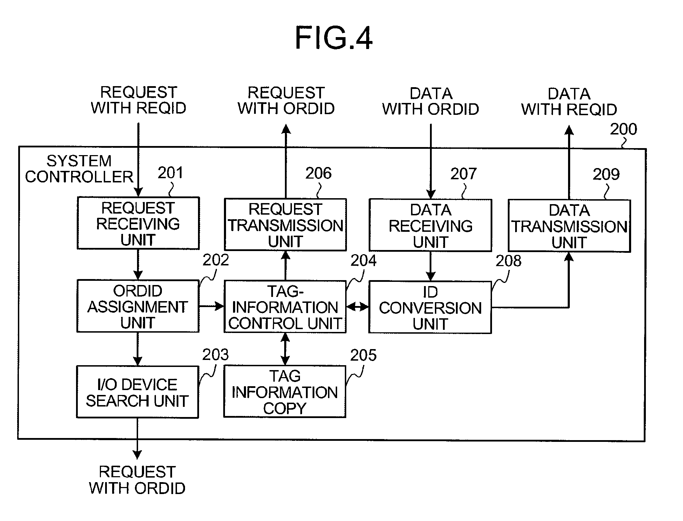

Fig. 4 is a block diagram of the main configuration of the system controller 200 according to the present embodiment. The system controller 200 shown in Fig. 4 includes a request receiving unit 201, an ORDID assignment unit 202, an I/O device search unit 203, a tag-information control unit 204, a tag information copy 205, a request transmission unit 206, a data receiving unit 207, an ID conversion unit 208, and a data transmission unit 209.

The request receiving unit 201 includes a buffer that stores therein the request with the REQID output from the REQID assignment unit 104 of the CPU 100, and stores the request with the REQID received from the CPU 100 in the buffer and also outputs the received request to the ORDID assignment unit 202.

The ORDID assignment unit 202 generates ORDID by adding ID of the CPU being the request issuing source to the REQID assigned to the request, and assigns the generated ORDID to the request.

The I/O device search unit 203 searches for an address of the I/O device 500 contained in the request from a device map or the like (not shown), and outputs the request with the ORDID to the I/O device 500. The request containing the address of the I/O device 500 is a request or the like for requesting entry of data mainly in the I/O device 500, and is a request stored in the MIQ 103b that is irrelevant to the cache 102 in the CPU 100.

The tag-information control unit 204 searches for an address contained in the request from the tag information copy 205, and finds out the CPU 100 or the memory 400 that stores therein the data for the address. The tag-information control unit 204 instructs the request transmission unit 206 to request a move-out of the data from the CPU 100 (hereinafter, called "the other CPU 100" to distinguish this CPU from the CPU 100 as the move-in request issuing source) that stores therein desired data, or from the memory 400. Furthermore, when the tag information of each CPU 100 is changed by the move-in of the data to the CPU 100 as the move-in request issuing source, the tag-information control unit 204 updates the tag information copy 205 according to the change.

The tag information copy 205 is a copy of tag information related to caches 102 of all the CPUs 100 connected to the system controller 200, and stores therein information indicating which of the data is stored in the cache 102 of each CPU 100. Therefore, the tag-information control unit 204 searches the tag information copy 205, and it is thereby found out which of the CPUs 100 stores the move-in data requested from the CPU 100 in the cache 102 thereof. Further, if desired data is not stored in any of the CPUs 100 as a result of searching the tag information copy 205, it is determined that the data is stored only in the memory 400, and thus the tag-information control unit 204 decides to send a request for a move-out of the data to the memory 400.

The request transmission unit 206 transmits the move-out request with the ORDID to the other CPU 100 that stores therein the move-in data or to the memory 400. If the move-in data is stored in any one of the CPUs 100, the request with the ORDID is received by the SCQ 107 of the other CPU 100 that stores therein the move-in data. If no move-in data is stored in any of the CPUs 100, the request with the ORDID is received by the main-storage control unit 300 connected to the upstream side of the memory 400.

The data receiving unit 207 includes a data queue that stores therein data with the ORDID obtained from the other CPU 100, the memory 400, or the I/O device 500 according to the request with the ORDID, and sequentially outputs the received data to the ID conversion unit 208.

The ID conversion unit 208 deletes the ID of the CPU 100 as the move-in request issuing source from the ORDID assigned to the data to be output from the data receiving unit 207, converts the ORDID to REQID, and outputs data with the REQID to the data transmission unit 209. At this time, because the deleted ID of the CPU 100 indicates the CPU 100 as the move-in request issuing source, the ID conversion unit 208 notifies the data transmission unit 209 of the CPU 100 of the deleted ID as a destination of the data. When the desired data is moved out from the other CPU 100 and is moved in to the CPU 100 as the move-in request issuing source, the respective pieces of the tag information for these CPUs 100 are changed. Thus, the ID conversion unit 208 instructs the tag-information control unit 204 to update the tag information copy 205.

The data transmission unit 209 transmits the data with the REQID output from the ID conversion unit 208 to the CPU 100 notified from the ID conversion unit 208. That is, the data transmission unit 209 transmits the move-in data to the CPU 100 as the move-in request issuing source.

Next, the operations of the CPUs 100 and the system controller 200 configured in the above manner are explained with a focus on an instruction process mainly when a cache miss occurs in the CPU 100 as the move-in request issuing source.

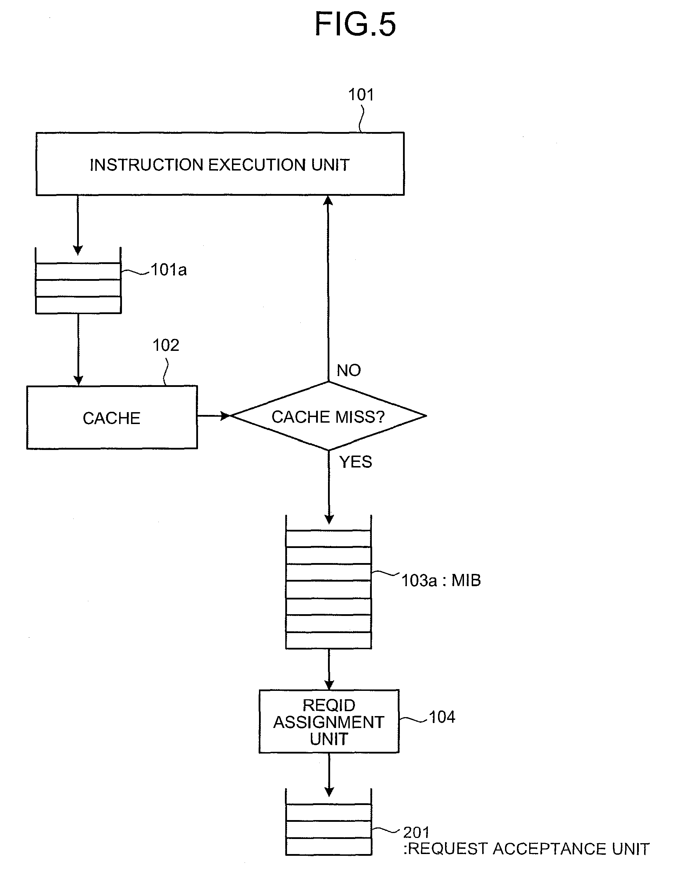

Fig. 5 is a schematic diagram of a process in the CPU 100 as the move-in request issuing source. This figure represents the process including reading of data from the cache 102 by the instruction execution unit 101. More specifically, the instruction execution unit 101 executes an instruction of the program, and when it is necessary to read the data from the cache 102, a load instruction for the data is stored in a port 101a of the instruction execution unit 101, previously stored load instructions are sequentially executed, and the access to the cache 102 is performed.

When the load instruction is executed, it is determined whether the desired data is cached by the cache 102. If no cache miss occurs, the data in the cache 102 is output to the instruction execution unit 101, where arithmetic processing is executed.

On the other hand, if the desired data is not cached by the cache 102 and a cache miss occurs, a move-in request is stored in the MIB 103a for the move-in of the data to the cache 102.

In the present embodiment, each of REQIDs uniquely corresponding to each of entries that can be received at a simultaneous time by the request receiving unit 201 of the system controller 200 is assigned to the move-in request to be stored in the MIB 103a. Therefore, there is no need to cause the number of physical queues usable by the MIB 103a to coincide with the number of entries that can be received at a simultaneous time by the request receiving unit 201. Thus, it is only necessary to decide the number of physical queues in the MIB 103a in consideration of the amount of material or the like because the number of entries in the MIB 103a is not limited due to the buffer capacity of the response side of the request. By increasing the number of physical queues in the MIB 103a as large as possible, the load instructions stored in the port 101a of the instruction execution unit 101 are executed from one after another, and the process of determining that there is a cache hit progresses without delay. Thus, the processing efficiency can be improved by the instruction execution unit 101.

The move-in requests stored in the MIB 103a are sequentially output to the REQID assignment unit 104, where a REQID is assigned to each move-in request. At this time, the request is output from either one of the MIB 103a and the MIQ 103b under preferential control, however, if many move-in requests are stored in the MIB 103a, requests irrelevant to the cache 102 are not generated so often, and thus it is considered that a small number of requests is stored in the MIQ 103b. On the contrary, if many requests are stored in the MIQ 103b, there are few cases where the move-in requests are issued to the other CPU 100 and the memory 400. In other words, in most of the cases, the requests are stored only in either one of the MIB 103a and the MIQ 103b.

Assignment of REQID is implemented in such a manner that the REQID assignment unit 104 selects any unused REQID from the REQID table 105 and assigns the selected REQID to the move-in request. The maximum number of REQIDs coincides with the number of requests that can be received at a simultaneous time by the request receiving unit 201 of the system controller 200, and is smaller than the number of physical queues in the MIB 103a and the MIQ 103b. The maximum number of REQIDs is limited by the buffer capacity of the request receiving unit 201 in the above manner. However, because the requests are often stored only in either one of the MIB 103a and the MIQ 103b, the same REQID can be effectively used without distinguishing the request in the MIB 103a from that of the MIQ 103b.

The request with the REQID is issued to the system controller 200, and is received by the request receiving unit 201. As shown in Fig. 5, the number of physical queues in the MIB 103a does not coincide with the number of entries in the request receiving unit 201. However, because the REQID is assigned to the request by the REQID assignment unit 104, in the request receiving unit 201, this seems equivalent to the case where the request is issued from the MIB 103a having the number of physical queues the same as the number of entries. More specifically, the system controller 200 performs the process in the same manner as that in the case where the MIB 103a has the number of physical queues the same as the number of entries in the request receiving unit 201, and thus, the configuration of the existing system controller 200 does not need to be changed. Consequently, cost increase can be minimized.

The requests with the REQIDs received by the request receiving unit 201 are sequentially output to the ORDID assignment unit 202, where the REQID is rewritten to ORDID. Here, because the request is the move-in request obtained from the MIB 103a, the ORDID and the move-in request are output to the tag-information control unit 204, the tag-information control unit 204 searches the tag information copy 205, and the other CPU 100 that stores therein the move-in data is thereby found out.

If the request is obtained from the MIQ 103b, for example, the I/O device search unit 203 searches the I/O device 500 and transmits the request with ORDID as a request for data input, to the I/O device 500. As a result of searching by the tag-information control unit 204, it is also found out that the move-in data is stored only in the memory 400.

When it is found out where the move-in data is stored (the other CPU 100 or the memory 400), the request transmission unit 206 transmits a move-out request as a request for a move-out of the move-in data to the other CPU 100 or the memory 400. Here, the explanation is continued assuming that the move-out request is transmitted to the other CPU 100. The move-out request is provided with ORDID, which makes it possible to identify the CPU 100 as the move-in request issuing source.

The move-out request is transmitted to the other CPU 100, and is received by the SCQ 107. Then, the request is delivered to the cache 102 of the other CPU 100, and the move-in data is output from the cache 102 to the MOQ 108. The data is provided with ORDID, and is transmitted from the MOQ 108 to the system controller 200.

The data with the ORDID is transmitted from the MOQ 108 of the other CPU 100, is received by the data receiving unit 207 of the system controller 200, and is stored in a data queue provided in the data receiving unit 207. The data with the ORDIDs are sequentially output to the ID conversion unit 208 in the order of being stored in the data queue, and the ID conversion unit 208 converts the ORDID into REQID. The ID conversion unit 208 moves out the move-in data from the other CPU 100, and notifies the tag-information control unit 204 of the move-in of the data to the CPU 100 as the move-in request issuing source.

The tag-information control unit 204 updates the tag information copy 205 according to the notification from the ID conversion unit 208. The move-in data with the REQID is transmitted from the data transmission unit 209 to the CPU 100 as the move-in request issuing source.

The transmitted data with the REQID is obtained by the REQID deassignment unit 106 of the CPU 100, and the data is output to the cache 102 and stored therein, to complete the move-in of the cache-missed data. The REQID deassignment unit 106 reads the physical queue number in the MIB 103a corresponding to the REQID assigned to the data from the REQID table 105, and deassigns the physical queue number from the MIB 103a. At the same time, in the REQID table 105, the REQID in association with the deassigned physical queue number is updated to an unused status. Accordingly, the MIB 103a and the REQID corresponding to the move-in request as a request for the move-in are deassigned in response to completion of the move-in, and the deassigned MIB 103a and REQID are used by a subsequent move-in request.

As explained above, according to the present embodiment, the physical queue numbers of the buffer that stores therein requests generated in the CPU 100 are converted to REQIDs corresponding to the number of requests that can be received at a simultaneous time by the system controller 200 on the response side, and the request with the REQID is issued to the system controller 200. Consequently, even if the number of physical queues of the buffer that stores therein the requests is increased in the CPU 100, the system controller 200 on the response side responds to the requests based on the REQIDs. Thus, the system controller 200 performs the process in the same manner as that in the case where the number of physical queues of the CPU 100 corresponds to the buffer capacity of the system controller 200. As a result, the CPU 100 can store therein a large number of requests irrespective of the buffer capacity of the response side, and thus it is possible to further improve the processing efficiency of the CPU core without stopping the subsequent memory operation.

### (Second Embodiment)

The characteristic of a second embodiment of the present invention is to improve efficiency of the block store process when the block store process for collectively rewriting part of the memory is executed, by assigning REQID to an address of the data to be rewritten and transmitting the address. The schematic configuration of an information processing device according to the present embodiment is the same as that of the first embodiment (Fig. 1), and thus explanation thereof is omitted.

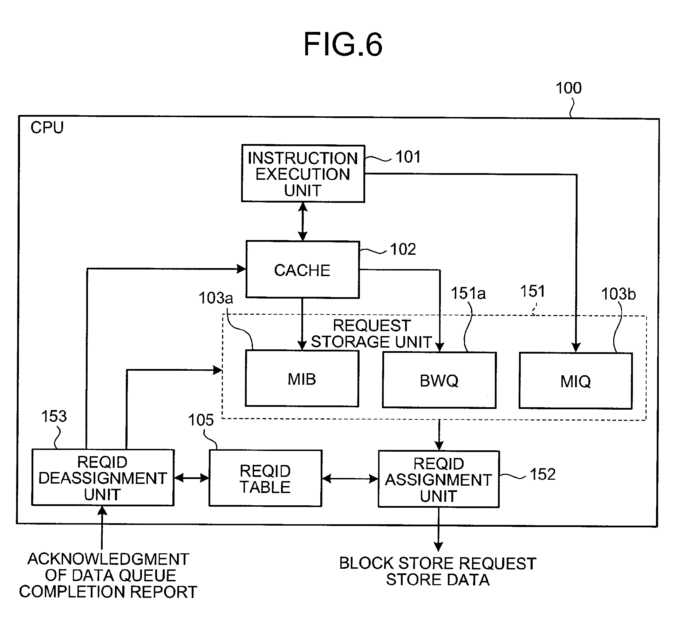

Fig. 6 is a block diagram of the main configuration of the CPU 100 according to the second embodiment of the present invention. In this figure, the same numerals are assigned to portions the same as these in Fig. 2, and explanation thereof is omitted. Furthermore, Fig. 6 represents the configuration of the CPU 100 that issues a request for the block store process, and processing units necessary for the other CPU 100 that moves out data or invalidates data upon the block store process are omitted from the configuration. The CPU 100 shown in Fig. 6 includes the instruction execution unit 101, the cache 102, a request storage unit 151, a REQID assignment unit 152, the REQID table 105, and a REQID deassignment unit 153.

The request storage unit 151 stores therein requests corresponding to instructions from the cache 102 and the instruction execution unit 101 while requested processes are executed. Particularly, in the present embodiment, the request storage unit 151 stores therein a block write request containing an address and data to be rewritten in the memory 400 to perform the block store process for rewriting part of the data stored in the memory 400 to the data stored in the cache 102. More specifically, the request storage unit 151 includes a Block Write Queue (BWQ) 151a in addition to the MIB 103a and the MIQ 103b.

When part of the data in the memory 400 is to be rewritten to the data in the cache 102, the BWQ 151a stores therein the block write request containing the address of the memory 400 and the data in the cache 102 to be rewritten. Further, the BWQ 151a divides the block write request into two flows such as a first flow and a second flow. Then, in the first flow, the BWQ 151a outputs a block store request containing only the address to the REQID assignment unit 152, and outputs data as store data to the REQID assignment unit 152 in the second flow when an instruction to output data is issued from the REQID deassignment unit 153. The BWQ 151a in the present embodiment is also configured to have an arbitrary number of physical queues irrespective of the number of entries that can be received by the system controller 200 as the response side, in the same manner as that of the MIB 103a and the MIQ 103b.

The REQID assignment unit 152 reads requests stored in the MIB 103a, the MIQ 103b, and the BWQ 151a while preferentially controlling any one of the requests, selects unused REQIDs from the REQID table 105, and assigns them to the respective read requests. When the block write request is read from the BWQ 151a, the REQID assignment unit 152 assigns REQID to the block store request to be output in the first flow and outputs the request, but does not assign REQID to the store data to be output in the second flow and outputs the store data as it is.

When obtaining the data with the REQID from the system controller 200, the REQID deassignment unit 153 reads a physical queue number in the MIB 103a or the MIQ 103b corresponding to the REQID from the REQID table 105, and deassigns the read physical queue number. In the REQID table 105, the REQID corresponding to the read physical queue number is updated to the unused status. The REQID deassignment unit 153 stores the obtained data in the cache 102, and completes the move-in of the data corresponding to the move-in request stored in the MIB 103a or the MIQ 103b.

Furthermore, when obtaining an acknowledgment of the data queue indicating that there is room in the data queue to receive the data by the system controller 200, the REQID deassignment unit 153 reads the physical queue number of the BWQ 151a corresponding to the REQID assigned to the acknowledgment of the data queue from the REQID table 105, and instructs to output the data stored in the physical queue with the read number as the store data. When a completion report indicating completion of the block write is obtained from the system controller 200, the REQID deassignment unit 153 deassigns the physical queue corresponding to the completed block write from the BWQ 151a. In the REQID table 105, the REQID corresponding to the completed block write is updated to the unused status.

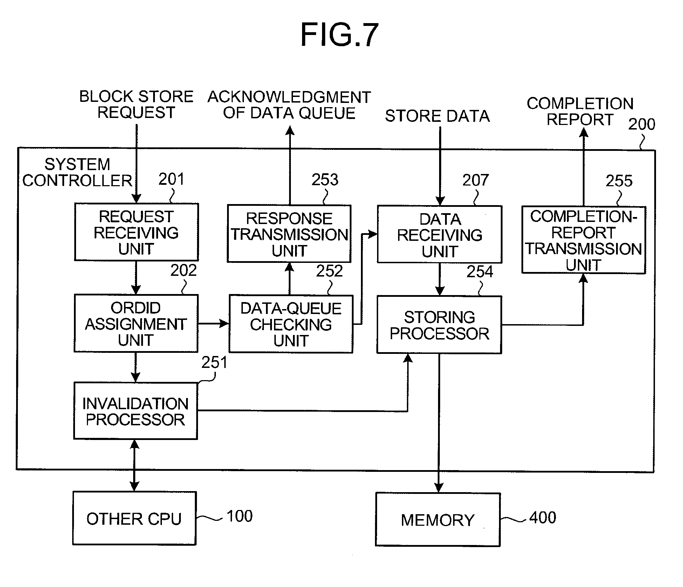

Fig. 7 is a block diagram of the main configuration of the system controller 200 according to the present embodiment. In the figure, the same numerals are assigned to portions the same as these in Fig. 4, and explanation thereof is omitted. The system controller 200 shown in Fig. 7 includes the request receiving unit 201, the ORDID assignment unit 202, an invalidation processor 251, a data-queue checking unit 252, a response transmission unit 253, the data receiving unit 207, a storing processor 254, and a completion-report transmission unit 255.

The invalidation processor 251 issues an invalidation request to all CPUs 100 other than the CPU 100 as a block-store-request issuing source so as to invalidate data, of the data stored in the cache 102, for an address contained in the block store request. The invalidation processor 251 checks that all the other CPUs 100 invalidate the data, and notifies the storing processor 254 of the address contained in the block store request and also of the completion of the invalidation process.

The data-queue checking unit 252 checks the availability of the data queue in the data receiving unit 207, and checks whether there is sufficient room in the data queue to store therein the data amount (or store data amount) corresponding to the address contained in the block store request output from the ORDID assignment unit 202.

The response transmission unit 253 transmits the acknowledgment of the data queue to the CPU 100 as the block-store-request issuing source when there is sufficient room in the data queue to store therein the store data, as a result of checking the availability of the data queue by the data-queue checking unit 252.

The storing processor 254 receives the notification indicating the completion of the invalidation process from the invalidation processor 251, reads the store data from the data queue in the data receiving unit 207, and writes the store data to the address of the memory 400 notified from the invalidation processor 251. The storing processor 254 finishes writing the store data to the memory 400, and notifies the completion-report transmission unit 255 of the completion of the store process.

When the storing processor 254 completes the store process, the completion-report transmission unit 255 transmits a completion report to the CPU 100 as the block-store-request issuing source, the completion report being assigned with the same REQID as the REQID assigned to the block store request.

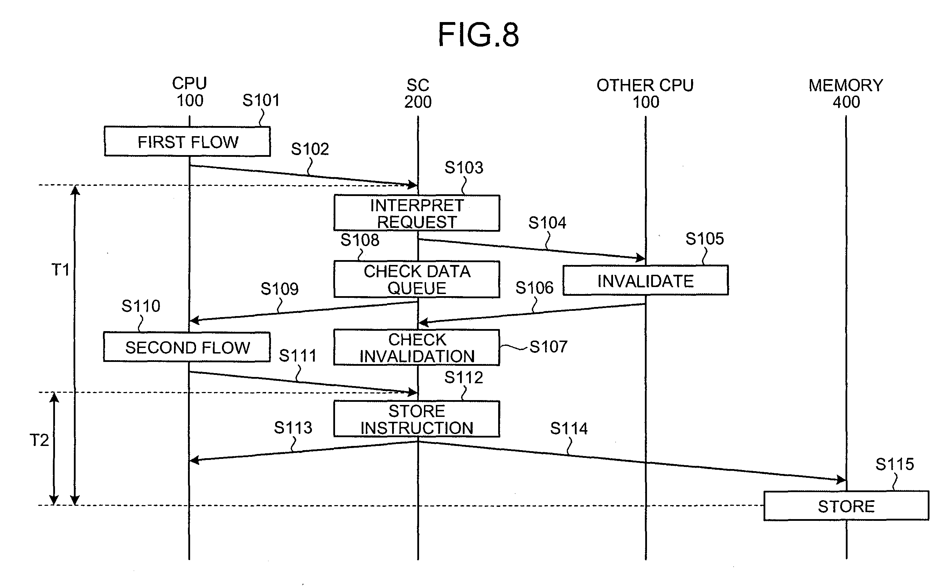

The operations upon performance of the block store process by the CPU 100 and the system controller 200 configured in the above manner are explained below with reference to the sequence diagram of Fig. 8.

At first, the data in the cache 102 is updated as a result of arithmetic processing by the instruction execution unit 101, and the block store process for rewriting the memory block of the memory 400 with the updated data is started. When the block store process is started, the address of the memory block of the memory 400 to be rewritten and the block write request containing new data are stored in the BWQ 151a.

The first flow of the block store process is started in the CPU 100 (step S101), the address is output from the BWQ 151a to the REQID assignment unit 152, and the REQID is assigned to the address. At this time, the address or the request is output from any one of the MIB 103a, the MIQ 103b, and the BWQ 151a under the preferential control. However, generally, the block store process is often executed when the memory is copied and so other processes are not executed during the copying process. Therefore, requests irrelevant to the cache 102 are not generated so often, and thus it is thought that there is almost no request to be stored in the MIQ 103b. The request to be stored in the MIB 103a may be generated even during the copying process because it is related to the ordinary operation. Thus, the REQID for the request output from the MIB 103a may be prepared separately from the REQID for the address output from the BWQ 151a.

The address with the REQID is issued as a block store request to the system controller (indicated by "SC" in Fig. 8) 200 (step S102), and is received by the request receiving unit 201. The number of physical queues in the BWQ 151a does not coincide with the number of entries in the request receiving unit 201 at this time. However, because the REQID assignment unit 152 assigns the REQID to the block store request, in the request receiving unit 201, this seems equivalent to the case in which the block store request is issued from the BWQ 151a having the number of physical queues the same as the number of entries.

Moreover, in the present embodiment, because the block store request is divided into the two flows, in the first flow, only the address is notified to the system controller 200 but the data is not transmitted. Therefore, in the first flow, the store data does not occupy the data queue in the data receiving unit 207 of the system controller 200. If the address and the data are simultaneously transmitted in the same manner as the conventional block store process, the data queue in the data receiving unit 207 is occupied by the store data during time T1 in Fig. 8.

Block store requests received by the request receiving unit 201 are sequentially output to the ORDID assignment unit 202 where the REQID is rewritten to the ORDID, the content of the request is interpreted as the block store request (step S103), and the block store request is output to the invalidation processor 251 and the data-queue checking unit 252.

The invalidation processor 251 transmits the invalidation request of the data for the address contained in the block store request to all the CPUs 100 other than the CPU 100 as the block-store-request issuing source (step S104). Each of the other CPUs 100 receives the invalidation request and invalidates the data rewritten on the memory 400 through the block store process, of the data stored in the cache 102 (step S105). When the data is invalidated, an invalidation completion report is transmitted from the other CPUs 100 to the system controller 200 (step S106). The invalidation completion report is obtained by the invalidation processor 251 to check that the invalidation is completed in the other CPUs 100 (step S107). The invalidation process is completed with these steps, and then the invalidation processor 251 notifies the storing processor 254 of the completion of the invalidation process.

On the other hand, when the block store request is output from the ORDID assignment unit 202, the data-queue checking unit 252 checks the availability of the data queue of the data receiving unit 207 (step S108). More specifically, it is checked whether there is free space corresponding to the data for the address contained in the block store request, in the data queue of the data receiving unit 207. When it is confirmed that there is the free space, it is understood that the store data to be stored in the memory 400 can be stored in the data queue, and thus the acknowledgment of the data queue is sent from the response transmission unit 253 to the CPU 100 as the block-store-request issuing source (step S109). If there is no free space therein, transmission of the acknowledgment of the data queue is waited until the free space is available.

In the CPU 100 as the block-store-request issuing source, the acknowledgment of the data queue is obtained by the REQID deassignment unit 153, and the second flow is started (step S110). More specifically, the REQID deassignment unit 153 reads the physical queue number of the BWQ 151a corresponding to the REQID assigned to the acknowledgment of the data queue from the REQID table 105, and outputs the store data stored in the physical queue to the REQID assignment unit 152. The store data is sent from the REQID assignment unit 152 to the system controller 200 (step S111).

The store data is received by the data receiving unit 207, and is stored in the data queue. At this time, it is confirmed by the block store request that the availability of the data queue, and thus sufficient free space remains in the data queue to store therein the store data. When the store data is stored in the data queue, a store instruction to store the store data is issued by the storing processor 254 (step S112), and the store instruction together with the store data is transmitted to the memory 400 through the main-storage control unit 300 (step S114). Then, the store data is written to the memory 400, and the store process is thereby completed (step S115).

At the same time, the completion report indicating completion of the store process is notified by the storing processor 254 to the completion-report transmission unit 255, where the completion report is transmitted to the CPU 100 as the block-store-request issuing source (step S113).

In the present embodiment, the store data is stored in the data receiving unit 207 of the system controller 200 after the second flow of the block store process is started in the CPU 100 as the block-store-request issuing source. In other words, the data queue in the data receiving unit 207 is occupied by the store data only during time T2 in Fig. 8. The time T2 is significantly shorter than the time T1 during which the data queue is occupied when the block store process similar to the conventional one is executed. Therefore, if the data queue has the same amount, the use efficiency of the data queue is higher in the block store process of the present embodiment, which allows improvement of the throughput. In other words, if the frequency of the block store process is the same as that of the conventional one, the block store process based on the present embodiment can be executed by the data queue less than that of the conventional one.

As explained above, according to the present embodiment, the block store process generated in the CPU 100 is divided into the two flows such as the first flow in which only the address is transmitted and the second flow in which the data is transmitted, and in the first flow, the REQID is assigned to the address. Therefore, it is possible to store a large number of block write requests related to the block store process irrespective of the buffer capacity of the response side, reduce the time during which the buffer of the response side is occupied by the data, and improve the throughput of the response side.

### INDUSTRIAL APPLICABILITY

The present invention is capable of storing a large number of requests irrespective of the buffer capacity of the response side and is applicable to the case where the processing efficiency of the CPU core is further improved.

## Claims

1. A processor device that issues a request for a process to an external device, the processor device comprising:
an execution unit that executes a predetermined instruction;
a storage unit that stores therein requests for processes sequentially generated by execution of instructions by the execution unit; and
a transmission unit that assigns to each of the requests stored in the storage unit identification information corresponding to a number of requests that can be simultaneously received by the external device and transmits the request with the identification information to the external device.

2. The processor device according to claim 1, wherein the storage unit stores therein requests equal to or more than the number of requests that can be simultaneously received by the external device.

3. The processor device according to claim 1, further comprising a cache memory that stores therein data used when the execution unit executes an instruction, wherein
the storage unit stores therein, when data necessary for the execution of the instruction by the execution unit is not stored in the cache memory, a move-in request to request transfer of the data to the cache memory.

4. The processor device according to claim 1, wherein the transmission unit includes
a table that stores therein a correspondence relation between the request and the identification information; and
an assignment unit that refers to the table and assigns unused identification information, which is identification information that is not associated with any request, to a new request.

5. The processor device according to claim 4, wherein the table stores a number of pieces of identification information coinciding with the number of requests that can be simultaneously received by the external device, each being associated with specific information for a corresponding request or with information indicating unused one.

6. The processor device according to claim 1, further comprising a cache memory that stores therein data used when the execution unit executes an instruction, wherein
the storage unit stores therein a block write request to write the data stored in the cache memory to a predetermined address in an external memory other than the cache memory.

7. The processor device according to claim 6, wherein the transmission unit separately transmits a request and data to be written, the request containing address information indicative of an address to which the data is written.

8. The processor device according to claim 7, wherein the transmission unit transmits a request containing the address information by assigning identification information thereto.

9. The processor device according to claim 7, wherein the transmission unit transmits the data to the external device when a response indicating that data can be received is obtained from the external device in response to the request.

10. The processor device according to claim 1, further comprising a deassignment unit that deassigns, when a request is executed by the external device, the identification information in association with already executed request as unused one.

11. The processor device according to claim 10, wherein the deassignment unit causes the storage unit to delete the already executed request therefrom.

12. An instruction processing method of issuing a request for a process to an external device, the instruction processing method comprising:
a step of executing a predetermined instruction;
a step of storing requests for processes sequentially generated by execution of instructions at the step of executing;
a step of assigning identification information corresponding to a number of requests that can be simultaneously received by the external device to each of the request stored at the step of storing; and
a step of transmitting the request with the identification information assigned thereto at the step of assigning to the external device.
